# EUROPÄISCHE PATENTSCHRIFT

(11) **EP 1 303 687 B1**
(45) Veröffentlichungstag und Bekanntmachung des Hinweises auf die Patenterteilung: **20.06.2007**
(21) Anmeldenummer: 01956510.0
(22) Anmeldetag: 04.07.2001
(51) Int. Cl.: F01P 11/02

(54) **VERSCHLUSSDECKEL MIT VERDREHSICHERUNG**
CLOSURE CAP PROVIDED WITH ANTI-TWISTING
BOUCHON DE FERMETURE A SYSTEME DE BLOCAGE EN ROTATION

(30) Priorität: 22.07.2000 DE 10035729
(43) Veröffentlichungstag der Anmeldung: 23.04.2003
(73) Patentinhaber: REUTTER, Heinrich, 71336 Waiblingen-Hohenacker (DE)
(72) Erfinder: REUTTER, Heinrich, 71336 Waiblingen-Hohenacker (DE)
(74) Vertreter: Dreiss, Fuhlendorf, Steimle & Becker
(86) Internationale Anmeldenummer: PCT/EP2001/007635
(87) Internationale Veröffentlichungsnummer: WO 2002/008586

(56) Entgegenhaltungen:
- EP-A- 0 400 514
- DE-A- 19 946 845

## Beschreibung

Die vorliegende Erfindung bezieht sich auf einen Verschlussdeckel für Öffnungen an Behältern, insbesondere an Kraftfahrzeugkühlern, nach dem Oberbegriff des Anspruchs 1 bzw. dem des Anspruchs 4.

Bei einem aus der WO 95/32904 bekannten Verschlussdeckel für Öffnungen an Behältern, insbesondere an Kraftfahrzeugkühlern, ist der Kupplungseinsatz zwischen Griffelement und Verschlusselement des Deckelaußenteils temperaturabhängig über eine Memory-Feder bewegungsmäßig gesteuert. Dabei liegt die Memory-Feder innerhalb des Deckelinnenteils an der dem Behälterinneren abgewandten Seite der Ventilanordnung. Es hat sich gezeigt, dass diese entfernte Anordnung der Memory-Feder zu Problemen und Verzögerungen bei der Erfassung der im Behälterinneren herrschenden Temperatur führt, was ein nicht ganz befriedigendes Resultat bei Aktivieren und Deaktivieren der Verdrehsicherung mit sich bringt.

Bei einem derartigen aus der EP-A-0 400 514 A1 bekannten Verschlussdeckel ist das Kupplungselement unmittelbar mit dem Ventilkörper verbunden. Eine derartige starre Verbindung ist bei solchen Verschlussdeckeln konstruktiv nicht durchführbar, bei denen weitere Bauelemente, wie Unterdruckventil, Überströmkanäle und dgl. vorgegeben sind.

Aufgabe der vorliegenden Erfindung ist es, einen Verschlussdeckel für Öffnungen an Behältern, insbesondere an Kraftfahrzeugkühlern, der genannten Art dahingehend zu verbessern, dass die Verdrehsicherung in unmittelbarer Abhängigkeit und zeitlichen Folge von den im Behälterinneren herrschenden Bedingungen aktiviert und deaktiviert ist.

Zur Lösung diese Aufgabe sind bei einem Verschlussdeckel für Öffnungen an Behältern, insbesondere an Kraftfahrzeugkühlern, die im Anspruch 1 bzw. die im Anspruch 4 angegebenen Merkmale vorgesehen.

Die Verdrehsicherung ist damit durch die unmittelbare Bewegungsableitung vom Ventilkörper in Abhängigkeit vom herrschenden Behälterinnendruck ohne zeitliche Verzögerungen und im Wesentlichen unmittelbar aktivierbar und deaktivierbar. Da der Druck im Behälterinneren unmittelbar auf den betreffenden Ventilkörper der Ventilanordnung wirkt, ist auch eine unmittelbare Wirksamkeit bei der Aktivierung und Deaktivierung der Verdrehsicherung gegeben. Im einen Fall wird zur Aktivierung der Verdrehsicherung die Bewegungsübertragung mittels einer Druckfeder durchgeführt, während die Rückführung zur deaktivierten Stellung durch eine kombinierte Druckfeder- und Zugverbindung erfolgt. Im anderen Fall erfolgt die Aktivierung der Verdrehsicherung durch eine starre Bewegungsübertragung vom Ventilkörper auf den Kupplungseinsatz, während die Rückführung in die deaktivierte drehfeste Verbindung über eine Gegendruckfeder erfolgt.

Vorteilhafte Ausgestaltungen ergeben sich im einen Fall aus den Merkmalen nach Anspruch 2 oder 3 und im anderen Fall aus den Merkmalen des Anspruchs 5.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Fig. 1: in längsgeschnittener Darstellung einen Verschlussdeckel für einen Kraftfahrzeugkühler mit einer Überdruck/Unterdruck-Ventilanordnung und einer Verdrehsicherung in jeweils geschlossener bzw. nicht aktivierter Ausgangsstellung gemäß einem ersten bevorzugten Ausführungsbeispiel vorliegender Erfindung,
- Fig. 2: eine der Fig. 1 entsprechende Darstellung, jedoch jeweils in einer Stellung während des Aufbaus eines Überdrucks im Behälterinneren,
- Fig. 3: eine der Fig. 1 entsprechende Darstellung in einer Stellung nach Überschreiten eines ersten Grenzwertes, jedoch vor Erreichen eines zweiten Grenzwertes des Behälterinnendrucks,
- Fig. 4: eine der Fig. 1 entsprechende Darstellung, jedoch in einer Stellung nach Überschreiten eines dritten bzw. Sicherheitsgrenzwertes des Behälterinnendrucks, und
- Fig. 5: eine der Fig. 1 entsprechende Darstellung, jedoch in einer Stellung nach Erreichen des Normaldrucks im Behälterinneren und vor Rückführung bzw. Aufheben der Verdrehsicherung,
- Fig. 6: in längsgeschnittener Darstellung einen Verschlussdeckel für einen Kraftfahrzeugkühler mit einer Überdruck/Unterdruck-Ventilanordnung in geschlossener Ausgangsstellung und mit einer eingerückten Verdrehsicherung gemäß einem zweiten bevorzugten Ausführungsbeispiel vorliegender Erfindung,
- Fig. 7: den Verschlussdeckel nach Fig. 6 in einer Stellung bei leichtem Überdruck im Behälterinneren und ausgerückter Verdrehsicherung,
- Fig. 8: den Verschlussdeckel nach Fig. 6 in einer Stellung nach Überschreiten eines ersten Grenzwertes des Behälterinnendrucks,
- Fig. 9: den Verschlussdeckel nach Fig. 6 nach Erreichen eines zweiten Grenzwertes des Behälterinnendrucks bzw. Anliegen eines Staudruckes und
- Fig. 10: den Verschlussdeckel nach Fig. 6 bei Überschreiten eines dritten Sicherheitsgrenzwertes des Behälterinnendrucks.

Der in der Zeichnung gemäß zweier Ausführungsbeispiele dargestellte Verschlussdeckel 111 bzw. 211 für bspw. einen Kraftfahrzeugkühler besitzt einen mit einem Griffelement bzw. einer Betätigungshandhabe 112, 212 versehenen Deckelaußenteil 110, 210, an dessen hier als Aufschraubelement ausgebildetem Verschlusselement 113, 213 ein Deckelinnenteil 114, 214 mit einer Unterdruck/Überdruck-Ventilanordnung 115, 215 hängend und relativ verdrehbar gehalten ist. In Gebrauchslage ist der Verschlussdeckel 111, 211 an einem nicht dargestellten Kühlerstutzen fixiert, bspw. aufgeschraubt. Dabei ragt der Deckelinnenteil 114, 214 in Richtung auf das Kühlerinnere in dem Kühlerstutzen vor. Ein O-Ring 116, 216 dichtet den Deckelinnenteil 114, 214 gegen die Kühlerstutzenwandung ab. Beim zweiteiligen Deckelaußenteil 110, 210 ist die kappenartige Betätigungshandhabe 112, 212 auf dem Aufschraubelement 113, 213 axial fixiert, jedoch in Umfangsrichtung verdrehbar. Diese Verdrehbarkeit ist bei Normaldruck im Kühlerinneren durch einen axial bewegbaren Kupplungseinsatz 180, 280 zum Auf- und Abschrauben des Verschlussdeckels 111, 211 blockiert.

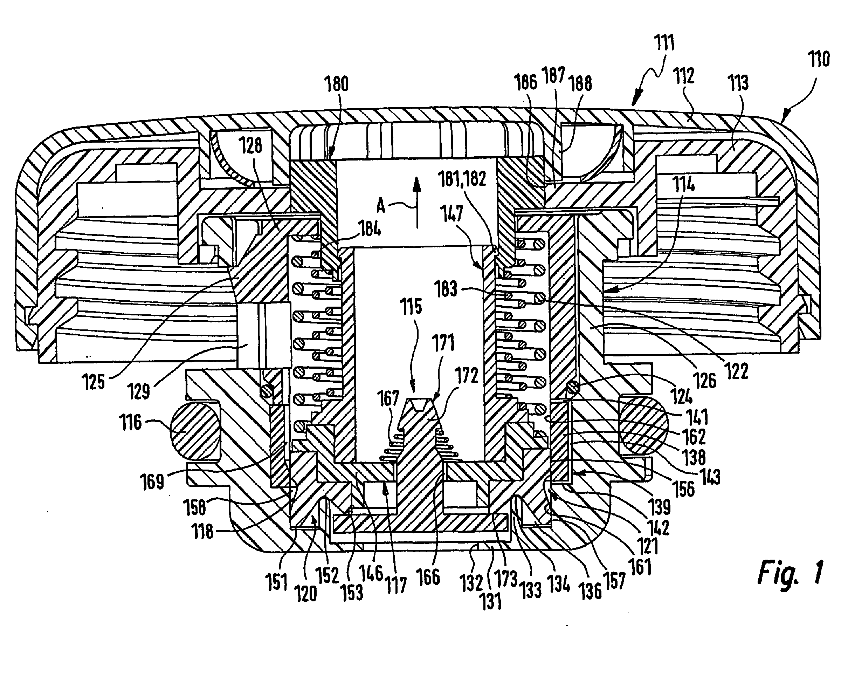

Beim Ausführungsbeispiel der Fign. 1 - 5 ist der Überdruckteil der Ventilanordnung 115 zweistufig ausgebildet und dient dazu, dass in einer ersten Überdruckstufe ein Leerkochen des Kühlers verhindert und in einer zweiten Überdruckstufe Sicherheit gegen Schäden am Kühlersystem wegen zu hohen Überdrucks gewährleistet ist. Der Überdruckteil der Ventilanordnung 115 besitzt einen einzigen Ventilkörper 117, der innerhalb des Deckelinnenteils 114 zwischen zwei Endstellungen axial bewegbar ist. Der Ventilkörper 117 besitzt eine profilierte Ringdichtung 118, die sowohl eine axial wirkende Dichtflächenanordnung 120 als auch eine radial wirkende Dichtflächenanordnung 121 besitzt. Der Ventilkörper 117 ist mittels einer sich am Deckelinnenteil 114 abstützenden Druckfeder 122 axial nach innen in Richtung zum Behälterinneren vorgespannt.

Der Deckelinnenteil 114 ist zweiteilig ausgebildet und damit aus einem inneren Element 125 und einem äußeren im Aufschraubelement 113 des Deckelaußenteils 110 hängend gehaltenen Hauptelement 126, in welchem das innere Element 125 abgedichtet fixiert ist, zusammengesetzt. Das innere Element 125 ist etwa haubenförmig mit einer axialen Durchbrechung im Haubenboden 128, an dessen Innenseite sich das eine Ende der Druckfeder 122 abstützt. Etwa in Höhe des unteren Endes des Deckelaußenteils 110 ist der Deckelinnenteil 114 außenumfangsseitig mit radialen Abströmöffnungen 129 versehen. Zwischen dem inneren Element 125 und dem Hauptelement 126 ist zur dichten Verbindung ein O-Ring 124 vorgesehen.

Das Hauptelement 126 des Deckelinnenteils 114 besitzt an seinem Boden 131 eine hier koaxiale Durchströmöffnung 132, die eine Verbindung zwischen dem Behälterinneren und dem Inneren des Deckelinnenteils 114 bildet. Die Durchströmöffnung 132 ist koaxial von einem zur Innenseite des Deckelinnenteils 114 abstehenden Ringansatz 133 umgeben, dessen freie Ringstirn einen Dichtsitz 134 für die axiale Dichtflächenanordnung 120 der Profilringdichtung 118 des Ventilkörpers 117 bildet. Zwischen dem Außenumfang des Ringansatzes 133 und dem Innenumfang des Hauptelements 126 in diesem Bereich verbleibt ein Ringraum 136. Oberhalb dieses Ringraumes 136 ist zwischen der unteren Ringstirn des inneren Elementes 125 und einem Rücksprung im Hauptelement 126 des Deckelinnenteils 114 ein Ringeinsatz 138 aufgenommen, der einen U-förmigen Drosselkanal 139 beinhaltet bzw. mit seinen benachbarten Bauteilen bildet. Der U-förmige Drosselkanal 139 ist beim dargestellten Ausführungsbeispiel an einer Stelle des Umfangs des Deckelinnenteils 114 vorgesehen. Der Drosselkanal 139 besitzt zwei in axialem Abstand angeordnete radiale Kanalteile 141 (dem inneren Element 125 benachbart) und 142 (dem Rücksprung im Hauptelement 126 benachbart), die durch einen axialen Kanalteil 143 verbunden sind, der sich zwischen dem betreffenden Innenumfangsbereich des Hauptelements 126 und dem betreffenden Außenumfangsbereich des Ringeinsatzes 138 befindet. Die Kanalteile 141, 142 und 143 sind hier durch im Ringeinsatz 138 eingeschnittene radiale bzw. axiale Nuten gebildet.

Der einteilige Ventilkörper 117 besitzt einen in axialer Richtung radial gestuften Hauptteil 146, der die Profilringdichtung 118 trägt, und auf dem der Profilringdichtung 118 abgewandt ein Führungselement 147 sitzt, das hohlzylindrisch ist und in den hohlen Kupplungseinsatz 180 greift. An einer radialen Außenschulter des Hauptteils 146 des Ventilkörpers 117 stützt sich die Druckfeder 122 ab.

An der Innenfläche eines gestuften Außenumfangsbereichs des Ventilkörpers 117 ist die Profilringdichtung 118 befestigt. Die axiale Dichtflächenanordnung 120 der Profilringdichtung 118 ist im Querschnitt gesehen gewölbeartig ausgebildet und besitzt eine radial äußere Dichtfläche 151, eine radial mittlere Dichtfläche 152 und eine radial innere Dichtfläche 153. Die radial innere Dichtfläche 153 wirkt mit einem noch zu beschreibenden Unterdruckventilkörper 171 zusammen, die radial mittlere Dichtfläche 152 liegt in Ruhestellung der Ventilanordnung 115 auf dem Dichtsitz 134 des Deckelinnenteils 114 auf und die radial äußere Dichtfläche 151 liegt am Boden des Ringraumes 136. Demgegenüber besitzt die radiale Dichtflächenanordnung 121 zwei in bestimmtem axialem Abstand angeordnete Dichtflächen 156 und 157, zwischen denen eine Freisparung 158 vorgesehen ist. Sowohl die obere Dichtfläche 156 als auch die untere Dichtfläche 157, die in die radial äußere Dichtfläche 151 übergeht, liegen an der als Dichtsitz ausgebildeten Innenwandung 161 und/oder 162 des Hauptelements 126 des Deckelinnenteils 114 bzw. des Ringeinsatzes 138 dichtend an.

Das mit seinem einen inneren Ende auf der Außenfläche der Innenschulter des Ventilkörpers 117 aufsitzende Führungselement 147 ragt mit seinem anderen Ende in die zentrische Durchgangsöffnung des Kupplungseinsatzes 180. Dabei sind Kupplungseinsatz 180 und Führungselement 147 gegeneinander verdrehbar und axial zueinander verschiebbar. Die axiale Verschiebbarkeit ist, wie Fig. 1 zeigt, durch aneinander liegende Schultern 181, 182 derart begrenzt, dass Führungselement 147 und Kupplungseinsatz 180 stets ineinander greifen. Das Führungselement 147 ist hülsenartig ausgebildet, wobei dessen Außenumfang am inneren, dem Ventilkörper 117 zugewandten Ende zur Ausbildung von Anlageschultern für eine axiale Federkopplungsanordnung gestuft ist. Die Federkopplungsanordnung besitzt eine erste innere Druckwendelfeder 183, die zwischen dem Kupplungseinsatz 180 und dem Führungselement 147 vorgespannt angeordnet ist, und eine demgegenüber äußere zweite Druckwendelfeder 184, die sich einenends am Führungselement 147 und anderenends am inneren Element 125 des Deckelinnenteils 114 abstützt. Diese beiden Druckwendelfedern 183 und 184 sind von der auf den Ventilkörper 117 wirkenden Druckwendelfeder 122 umgeben.

Der axial verschiebbare Kupplungseinsatz 180, der mit seinem unteren Ende, das das Führungselement 147 übergreift, eine mittige Durchgangsbohrung des inneren Elementes 125 des Deckelinnenteils 114 durchdringt, liegt mit seinem äußeren im Außendurchmesser größeren Ende im Ausgangszustand gemäß Fig. 1 innerhalb einer Ausnehmung 186 eines radialen Flansches 187 des Aufschraubelements 113 und innerhalb eines an der Betätigungshandhabe 112 axial nach innen ragenden zentrischen Ringflansches 188. Der Kupplungseinsatz 180 ist mit dem axialen Flansch 188 an der Betätigungshandhabe 112 in ständiger Weise unverdrehbar verbunden, bspw. durch entsprechende ineinander greifende Umfangsverzahnungen. In der in Fig. 1 dargestellten Ausgangsstellung ist der Kupplungseinsatz 180 außerdem mit dem radialen Flansch 187 des Aufschraubelements 113, und zwar ebenfalls über nicht dargestellte umfangsseitige und axial verlaufende Verzahnungsanordnungen unverdrehbar verbunden. Auf diese Weise sind Betätigungshandhabe 112 und Aufschraubelement 113 in Umfangsrichtung unverdrehbar miteinander verbunden, so dass sich der Verschlussdeckel 111 mittels der Betätigungshandhabe 112 auf den nicht dargestellten Einfüllstutzen eines Behälters auf- und abschrauben lässt.

Im Zentrum des Ventilkörpers 117 ist eine Öffnung 166, die auf der zum Kühlerinneren zugewandten Seite durch den Unterdruckventilkörper 171 der Ventilanordnung 115 verschlossen ist, vorgesehen. Der Unterdruckventilkörper 171 ragt mit seinem Hauptteil 172 durch die zentrale Öffnung 166 und ist an dessen Endbereich von einer Druckfeder 167 beaufschlagt, die sich einenends an einer Schulter des Hauptteils 172 und anderenends an der Außenfläche der Innenschulter des Ventilkörpers 117 abstützt. Auf diese Weise ist der Unterdruckventilkörper 171 mit seinem ringförmigen Dichtsitz 173 an die radial innere Dichtfläche 153 der axialen Dichtflächenanordnung 120 der Profilringdichtung 118 des Ventilkörpers 117 dichtend angelegt.

In der in Fig. 1 dargestellten Ruhe- bzw. Ausgangsbetriebsstellung, in der noch kein Überdruck im Behälterinneren herrscht, ist jegliche Strömungsverbindung zwischen Behälterinnerem und Behälteräußerem durch die dichtende Anlage aller Dichtflächen 151 bis 153 der axialen Dichtflächenanordnung 120 der Profildichtung 118 des Ventilkörpers 117 an den jeweiligen Dichtsitzen 136, 134, 173 des Deckelinnenteils 114 bzw. des Unterdruckventilkörpers 171 verschlossen. Mit anderen Worten, an der Profilringdichtung 118 des Ventilkörpers 117 sowie an der Unterseite des Unterdruckventilkörpers 171 steht durch die Durchströmöffnung 132 hindurch der im Behälterinneren herrschende Normal- bzw. Umgebungsdruck in Form des über dem flüssigen Kühlermedium sich befindenden Luftpolsters an.

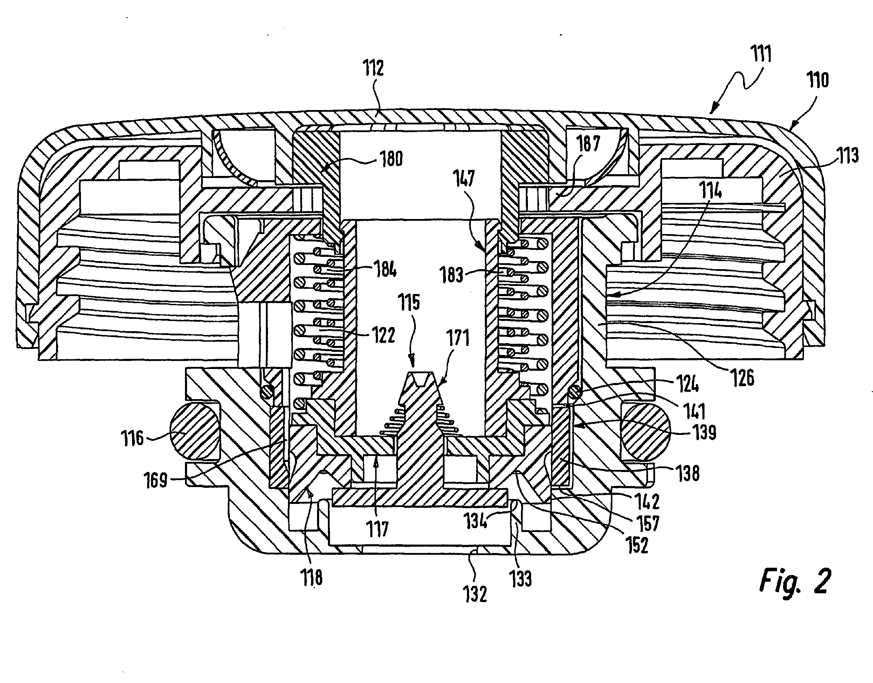

Erhöht sich der Behälterinnendruck auf einen bestimmten Betrag, der über dem Normaldruck, aber unter einem ersten Grenzwert des Behälterinnendrucks liegt, wird die Abschraubsicherung des Verschlussdeckels 111 aktiviert. Gemäß Fig. 2 wird der Ventilkörper 117 nach oben bewegt, so dass die Profilringdichtung 118 mit ihrer mittleren Dichtfläche 152 vom Dichtsitz 134 abhebt. Dadurch vergrößert sich die vom Überdruck beaufschlagte Wirkfläche, die bisher nur durch die Unterseite des Unterdruckventilkörpers 171 gebildet war, um die innere axiale Fläche der Profilringdichtung 118. Diese größere Wirkfläche bewirkt bei gleichem Druck eine größere Kraft auf den Ventilkörper 117 und resultiert in dessen vergrößertem Hub. Durch die Hubbewegung des Ventilkörpers 117, die jedoch den Drosselkanal 139 noch nicht freigibt, entgegen der Wirkung der ersten Druckwendelfeder 183 und der zweiten Druckwendelfeder 184 wird das Führungselement 147 zunächst relativ zum Kupplungseinsatz 180 axial verschoben. Da durch diese Hubbewegung die erste Druckwendelfeder 183, die sich am Kupplungseinsatz 180 abstützt, vorgespannt ist, wird der Kupplungseinsatz 180 axial verschoben. Durch diese axiale Bewegung des Kupplungseinsatzes 180 nach außen in Richtung des Pfeiles A und bis zu einem inneren Anschlag an der Unterseite der Betätigungshandhabe 112 kommt der Kupplungseinsatz 180 mit seinem außendurchmessergrößeren Ende von der Verzahnung am Aufschraubelement 113 frei. Diese Ausrückbewegung des Kupplungseinsatzes 180 bewirkt, dass die Betätigungshandhabe 112 gegenüber dem Aufschraubelement 113 leerdreht, so dass ab einem bestimmten definierten Überdruck (hier von bspw. 0,3 bar) ein Abschrauben des Verschlussdeckels 111 nicht mehr möglich ist.

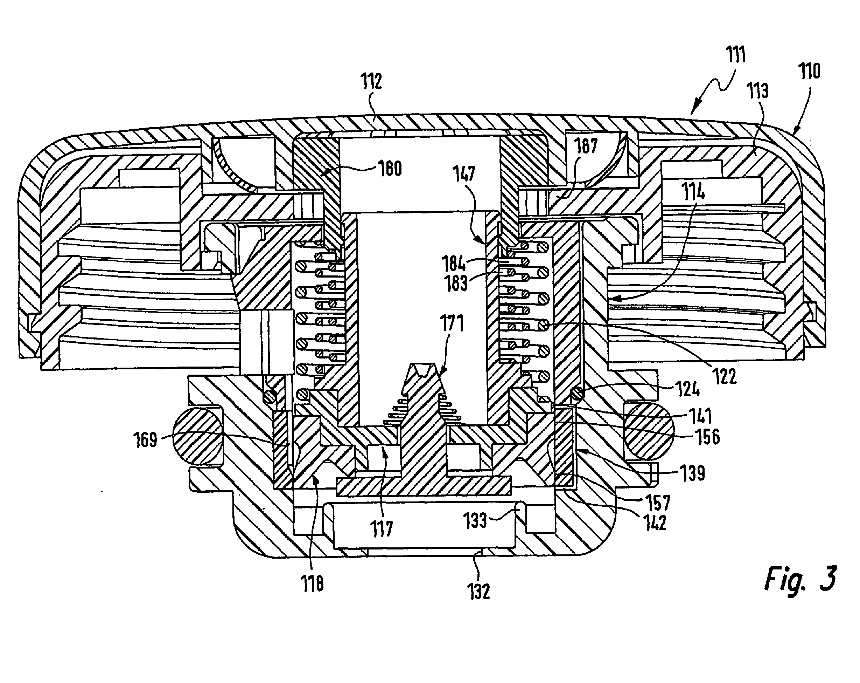

Erhöht sich der Behälterinnendruck weiter, d. h. über den vorgegebenen ersten Grenzwert (bspw. 1,4 bar), erreicht die Ventilanordnung 115 des Verschlussdeckels 111 den in Fig. 3 dargestellten Betriebszustand, gemäß welchem der Ventilkörper 117 entgegen der Wirkung seiner Druckfeder 122 weiter abhebt und die Profilringdichtung 118 in den Bereich des Ringeinsatzes 138 derart gelangt, dass sich die beiden radialen Dichtflächen 156 und 157 der radialen Dichtflächenanordnung 121 der Profilringdichtung 118 des Ventilkörpers 117 unterhalb bzw. oberhalb der radialen Kanalteile 141 und 142 befinden und somit den Drosselkanal 139 beidendig öffnen. In diesem Betriebszustand, in dem die Abschraubsicherung weiterhin aktiviert bleibt, hat sich ein Ausgleich zwischen der Wirkung des Behälterinnendruckes und der Gegenwirkung der Druckfeder 122 eingestellt. Damit ist eine erste Strömungsverbindung zwischen dem Behälterinneren und dem Behälteräußeren geöffnet, die von der Durchströmöffnung 132 über den U-förmigen Drosselkanal 139 zu den Abströmöffnungen 129 führt. Dadurch kann Luft aus dem über dem flüssigen Kühlermedium befindlichen Luftpolster nach außen strömen und den Überdruck kompensieren oder abbauen. Wird dadurch der Überdruck nach unterhalb des ersten Grenzwertes abgebaut, gelangt der Ventilkörper 117 wieder in dichtende Anlage mit dem axialen Dichtsitz 134 des Deckelinnenteils 114.

Erhöht sich dagegen der Behälterinnendruck auch während oder nach dem Entweichen des Luftpolsters weiter und führt dies dazu, dass flüssiges Kühlermedium an die Unterseite der Profilringdichtung 118 und des Unterdruckventilkörpers 171 gelangt, ergibt sich aufgrund des sehr engen Drosselkanals 139 (bspw. in einer Querschnittsgrößenordnung von wenigen hundertstel Millimetern) ein Stau des flüssigen Kühlermediums am Eingang des unteren radialen Kanalteils 142 des Drosselkanals 139 und damit ein Staudruck an den vollflächigen Unterseiten von Profilringdichtung 118 und Unterdruckventilkörper 171. Dieser Staudruck führt zu einer axialen Bewegung des Ventilkörpers 117 weiter entgegen der Wirkung der Druckfeder 122, so dass der Drosselkanal 139 in diesem Betriebszustand von bspw. 1,5 bar in nicht dargestellter Weise am oberen radialen Kanalteil 141 von der oberen radialen Dichtfläche 156 der Profilringdichtung 118 wieder verschlossen wird. Die Abschraubsicherung ist weiterhin aktiviert. Dadurch ist ein Auswurf von flüssigem Kühlermedium verhindert. Wird durch Abkühlen des Kraftfahrzeugkühlers der Behälterinnendruck abgebaut und damit das flüssige Kühlermedium wieder rückgeführt, kann auch der Ventilkörper 117 unter der Wirkung seiner Druckfeder 122 rückgeführt werden, so dass sich der Drosselkanal 139 wieder öffnet und ein weiterer Druckabbau stattfinden kann.

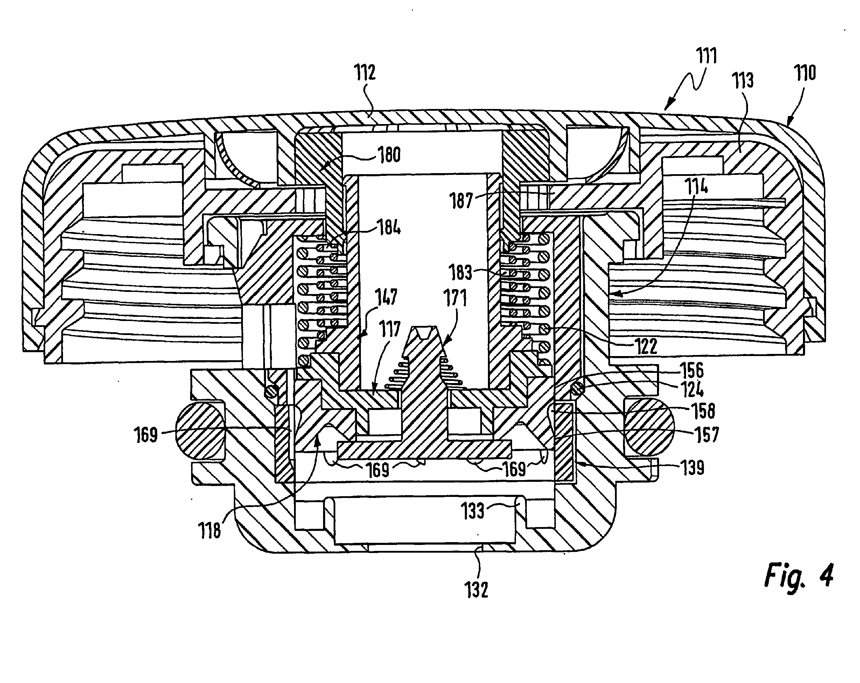

Erhöht sich dagegen der Behälterinnendruck weiter, wird bei Überschreiten eines oberen (Sicherheits-)Druckgrenzwertes (von bspw. 2 bar) der Ventilkörper 117 weiter entgegen der auf ihm lastenden Druckfeder 122 angehoben, so dass in der Wandung sowohl des Ringeinsatzes 138 als auch des inneren Elementes 125 des Deckelinnenteils 114 an bestimmten Umfangsbereichen befindende axiale Abströmkanäle-169 geöffnet werden, die mit der Abströmöffnung 129 und deshalb mit dem Behälteräußeren in Verbindung stehen (Fig. 4). In diesem Betriebszustand ist der obere Kanalteil 141 nach wie vor verschlossen. Diese obere Endstellung des Ventilkörpers 117 ist durch die zusammengepressten Druckfedern 122, 183 und 184 begrenzt. Die Abschraubsicherung bleibt weiterhin aktiviert.

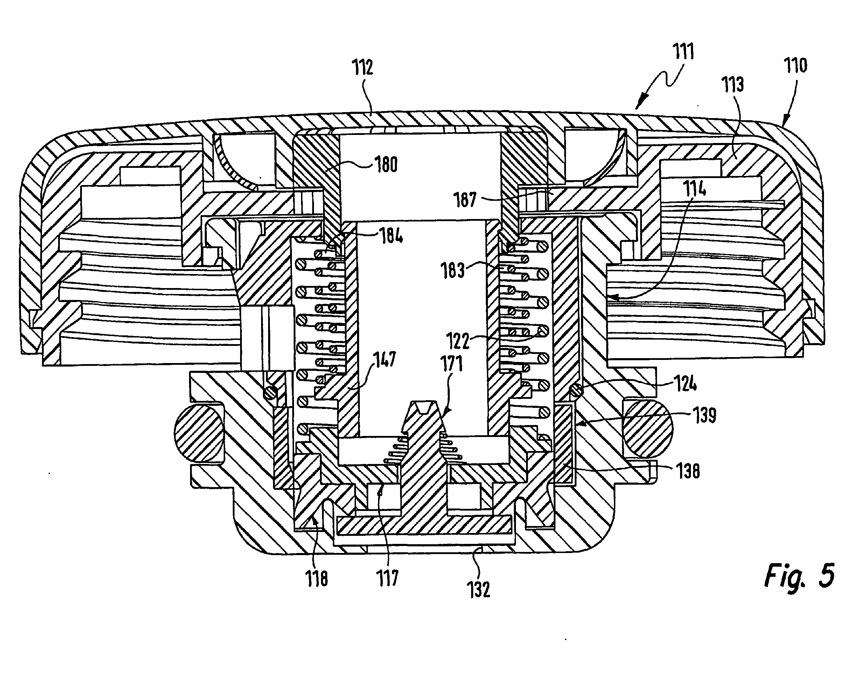

Dadurch kann der genannte Überdruck über eine zweite Strömungsverbindung abgebaut werden, wonach eine entsprechende Rückführung des Ventilkörpers 117 über die verschiedenen Betriebszustände durch die Druckfeder 122 erfolgen kann, wie dies in Fig. 5 gezeigt ist.

Fig. 5 zeigt auch einen möglichen kurzfristigen Zustand der Abschraubsicherung dann, wenn der Ventilkörper 117 in seine Ausgangslage zurückgeführt ist und während der Aktivierung der Abschraubsicherung ein Verdrehen der Betätigungshandhabe 112 erfolgt ist. In diesem Falle könnte eingetreten sein, dass der Kupplungseinsatz 180 mit seiner Verzahnung nicht genau über den Zahnlücken der Verzahnung des Aufschraubelements 113 steht. Um in diesem Falle die Abschraubsicherung aus ihrem aktivierten in ihren deaktivierten Zustand gemäß Fig. 1 zurückzuführen, reicht eine kurze Drehbetätigung der Betätigungshandhabe 112 aus, wodurch bewirkt wird, dass die unter erheblicher Vorspannung stehende äußere zweite Druckwendelfeder 184 das Führungselement 147 entgegen Pfeil A nach unten bewegt. Damit wird die innere erste Druckfeder 183 entspannt und das Führungselement 147 nimmt mit seiner Außenringschulter 181 durch Anlage an der Innenringschulter 182 des Kupplungseinsatzes 180 diesen entgegen Pfeil A mit, so dass die Kupplungsverbindung zwischen der Betätigungshandhabe 112 und dem Aufschraubelement 113 wieder einrückt bzw. zur Wirkung kommt. Damit ist die Betriebsstellung insgesamt nach Fig. 1 erreicht und der Verschlussdeckel 111 kann vom Einfüllstutzen des Kühlers gefahrlos abgeschraubt werden.

Die in Fig. 1 dargestellte Ausgangsstellung nimmt die Ventilanordnung 115 dann ein, wenn sich der Kühlerinnendruck zwischen einem Unterdruckgrenzwert und einem nur sehr geringen Überdruckwert von hier weniger als 0,3 bar bewegt. Derartige Druckverhältnisse herrschen etwa bei einem für längere Zeit abgestellten Fahrzeug oder bei Fahrbetrieb des Fahrzeugs und hinreichender Kühlung der im Kühlerinneren befindlichen Kühlflüssigkeit durch den Fahrtwind und/oder mit Ventilatorunterstützung. Wird das Fahrzeug bspw. nach längerer Fahrt stillgesetzt, so kann sich im Kühlerinneren ein Druckanstieg ergeben, aufgrund dessen der Ventilanordnung 115 Kühlerinhalt (Luft oder Wasser bzw. Wasserdampf) zuströmen kann. Expandiert das Kühlmittelvolumen infolge dieser Nachheizwirkung derart, dass das Behältervolumen überschritten wird, würde dies zwangsläufig zum Kühlmittelausstoß führen. Dieser unerwünschte Effekt wird in vorbeschriebener Weise verhindert. Wenn es in diesem Betriebszustand zu einem weiteren unkontrollierten Druckanstieg im Kühlsystem kommt, müssen Leckagen und andere nachteilige Auswirkungen durch Überbeanspruchung des Kühlerbehältnisses und/oder der Schlauchverbindungsstellen verhindert werden. Diese Auswirkungen werden durch die zweite Ventilstufe gemäß dem Zustand der Fig. 4 verhindert, die den Behälterdruck auf einen vorgegebenen Sicherheitsdruckwert begrenzt.

Herrscht im Kühlerinneren Unterdruck und unterschreitet dieser einen vorgegebenen Unterdruckgrenzwert, so wird, ausgehend von der Betriebslage nach Fig. 1, der Unterdruckventilkörper 171 mit seinem Dichtsitz 173 von der radial inneren Dichtfläche 153 der Profilringdichtung 118 des Ventilkörpers 117 zum Kühlerinneren hin abgehoben. Das Absenken des Unterdruckventilkörpers 171 erfolgt gegen die Vorspannkraft der Druckfeder 167, so dass sich in nicht dargestellter Weise eine dritte Strömungsverbindung zwischen dem Kühlerinneren und dem Kühleräußeren öffnet.

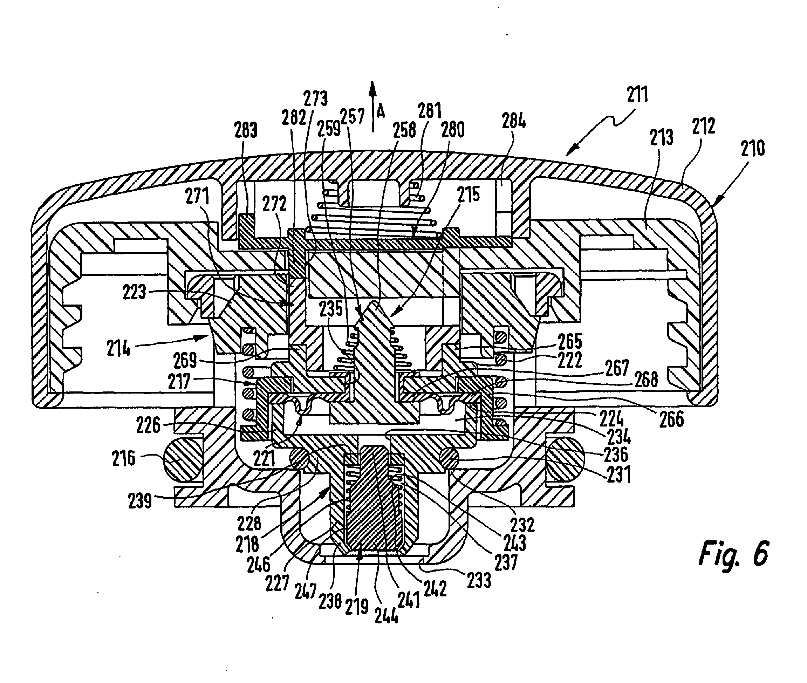

Der Überdruckteil der Ventilanordnung 215 nach dem Ausführungsbeispiel der Fign. 6 - 10 ist zweistufig ausgebildet und dient dazu, dass in einer ersten Überdruckstufe ein Leerkochen des Kühlers verhindert und in einer zweiten Überdruckstufe Sicherheit gegen Schäden am Kühlersystem wegen zu hohen Überdrucks gewährleistet ist. Der Überdruckteil der Ventilanordnung 215 besitzt im Inneren des Deckelinnenteils 214 einen ersten Ventilkörper 217 und einen zweiten Ventilkörper 218 sowie einen dritten Ventilkörper 219. Dabei ist der erste Ventilkörper 217 in Richtung zur Deckelaußenseite oberhalb des zweiten Ventilkörpers 218 angeordnet, während der dritte Ventilkörper 219 koaxial innerhalb des zweiten Ventilkörpers 218 aufgenommen ist.

Der erste zweiteilig ausgebildete Ventilkörper 217 besitzt einen radial inneren Ventilkörperteil 265 in Form etwa eines Ventiltellers und einen radial äußeren Ventilkörperteil 266, die randseitig einander überlappen, wobei der radial innere auf dem radial äußeren Ventilkörperteil aufsitzt. Auf der zum Kühlerinneren zugewandten Seite der beiden Ventilkörperteile 265, 266 ist eine mit axial nach innen gewandten Dichtflächen versehene ringförmige Membrandichtung 221 angebracht. Der radial äußere stufenförmige Ventilkörperteil 266 des ersten Ventilkörpers 217 wird von einer dem Kühlerinneren abgewandten Seite her von einer Schließdruckfeder 222 beaufschlagt, die sich mit ihrem vom ersten Ventilkörper 217 abgewandten Ende an einem Federteller 223 abstützt, welcher sich wiederum an dem Deckelinnenteil 214 abstützt. Mittels der Schließdruckfeder 222 ist der radial äußere Ventilkörperteil 266 des ersten Ventilkörpers 217 in Richtung auf das Kühlerinnere vorgespannt. Über den radial äußeren flachen Dichtrand 268 der Membrandichtung 221 sitzt der radial äußere Ventilkörperteil 266 auf einem ersten ringförmigen Dichtsitz 224 des zweiten Ventilkörper 218. Der radial innere Ventilkörperteil 265 des ersten Ventilkörpers 217 besitzt eine mittige Ausnehmung 237, deren ringförmiger Begrenzungsrand von dem inneren Teil der Membrandichtung 221 umgriffen ist. Dieser radial innere U-förmige Dichtrand 267 der Membrandichtung 221 bildet zum Behälterinneren hin eine Dichtfläche für ein noch zu beschreibendes Unterdruckventil 257. Außenrandseitig liegt der radial innere Ventilkörperteil 265 auf dem inneren Rand des radial äußeren Ventilkörperteils 266 des ersten Ventilkörpers 217 auf.

Der radial innere Ventilkörperteil 265 besitzt nahe seinem radialen Außenrand einen axial vorspringenden Ringrand 269, auf dem eine gegenüber dem Ventilkörper 265 verdrehbare Führungshülse 271 sitzt, deren inneres Ende in abgekröpfter Weise den Ringrand 269 radial innenseitig übergreift. Auf dem anderen axialen Ende der Führungshülse 271, das durch einzelne einstückig vorstehende Finger 272 gebildet ist, liegt der Kupplungseinsatz 280 unter der Wirkung einer Druckfeder 281, die sich an der Innenseite des Griffelements 212 des Deckelaußenteils 213 abstützt, auf. Der Kupplungseinsatz 280 besitzt eine Scheibe 285, die mit axial nach unten stehenden fingerartigen Klauen 282 versehen ist, die im Querschnitt den Fingern 272 der Führungshülse 271 entsprechen. Sowohl die Finger 272 der Führungshülse 271 als auch die Klauen 282 des Kupplungseinsatzes 280 greifen gemäß Fig. 6 in drucklosem Zustand des Kühlerinneren in axiale Ausnehmungen 273 des Verschlusselements 210 des Deckelaußenteils 213 ein. Außerdem besitzt die Kupplungseinsatzscheibe 285 axial nach außen, d. h. den Klauen 282 abgewandt, vorstehende Klauen 283, die zwischen eine axial gerichtete Umfangszahnung 284 des Griffteils 212 formschlüssig greifen. Die nach innen gewandten Klauen 282 liegen auf einem radial inneren Ring, während die axial nach außen stehenden Klauen 283 auf einem radial äußeren Ring liegen. In der in Fig. 6 dargestellten Ausgangs- bzw. Normaldruckstellung besteht über den Kupplungseinsatz 280 eine drehfeste Verbindung zwischen dem Griffelement 212 und dem Verschlusselement 210 des Deckelaußenteils 213, so dass der Verschlussdeckel 211 auf den nicht dargestellten Einfüllstutzen eines Behälters auf- und abgeschraubt werden kann.

Der einstückige zweite Ventilkörper 218 besitzt ein Haubenteil 226, das an seiner freien Stirn mit dem ersten Dichtsitz 224 versehen ist, und ein vom Boden 228 des Haubenteils 226 zum Kühlerinneren weisenden konzentrischen und hohlzylindrischen Aufnahmeteil 227 für den dritten Ventilkörper 219. Der Boden 228 zwischen Haubenteil 226 und Aufnahmeteil 227 ist außenumfangsseitig mit einem Bund versehen, in deren Umfangsrille eine zweite Ringdichtung in Form eines O-Ringes 231 aufgenommen ist. Dem O-Ring 231 ist ein zweiter Dichtsitz 232 zugeordnet, der durch einen Kragenrand am Deckelinnenteil 214 gebildet ist. Der Kragenrand 232 ist zwischen einem den ersten Ventilkörper 217 sowie das Haubenteil 226 des zweiten Ventilkörpers 218 aufnehmenden innendurchmessergrößeren hohlzylindrischen oberen Bereich des Deckelinnenteils 214 und einem das Aufnahmeteil 227 des zweiten Ventilkörpers 218 umgebenden innendurchmesserkleineren unteren Bereich des Deckelinnenteils 214 ausgebildet. An diesem unteren Bereich ist der Deckelinnenteil 214 mit einer axialen Öffnung 233 versehen. Durch die Schließdruckfeder 222 ist der radial äußere Ventilkörperteil 266 des ersten Ventilkörpers 217 mit dem Dichtring 268 der ersten Ringdichtung 221 gegen den ersten Dichtsitz 224 des zweiten Ventilkörpers 218 gedrückt, welcher seinerseits mit seiner zweiten Ringdichtung 231 gegen den zweiten Dichtsitz 232 am Deckelinnenteil 214 gedrückt ist.

Zwischen der Unterseite der ersten Ringdichtung 221 des ersten Ventilkörpers 217 und der Oberseite des Bodens 228 des zweiten Ventilkörpers 218 befindet sich eine zylindrische Kammer 234, deren Außenumfang in axialer Richtung zwischen Boden 228 und Unterseite der ersten Ringdichtung 221 konstant ist. Die Kammer 234 steht mittig über eine Bohrung 236 im Boden 228 mit einer Ausnehmung 237 im zweiten Ventilkörper 218 in Verbindung. Die Ausnehmung 237 mündet an einem am freien Ende des Aufnahmeteils 227 angeordneten Konusbereich 238 in die axiale Öffnung 233 des Deckelinnenteils 214. Zwischen Bohrung 236 und Ausnehmung 237 besitzt der zweite Ventilkörper 218 eine zum Kühlerinneren hin weisende Schulter, an der eine dritte flache ringförmige Dichtung 239 gehalten ist.

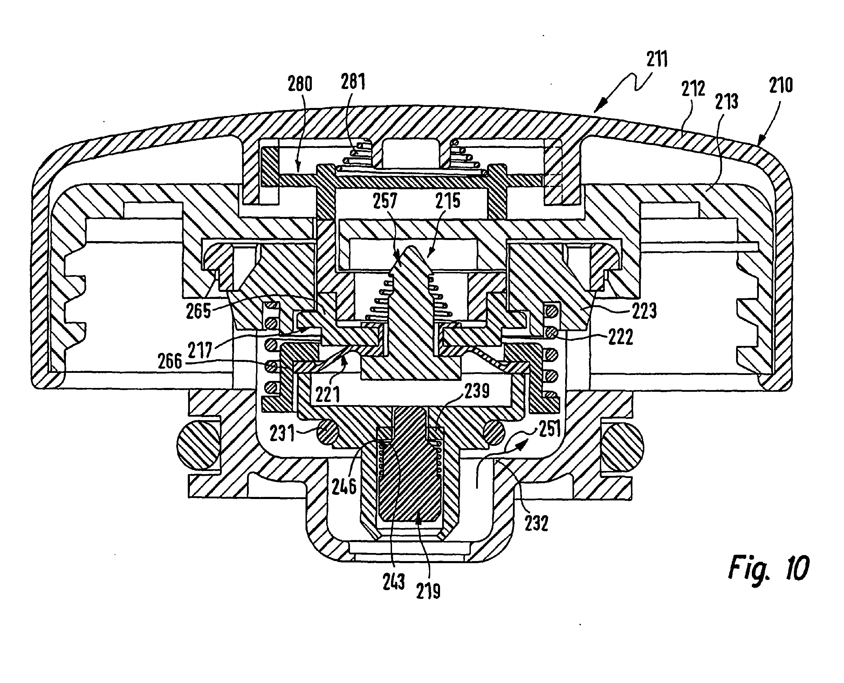

Der dritte Ventilkörper 219, der bspw. als in axialer Richtung umfangsseitig gestuftes Drehteil ausgebildet ist, ist in der Ausnehmung 237 des zweiten Ventilkörpers 218 axial bewegbar aufgenommen. Der dritte Ventilkörper 219 besitzt einen durchmesserkleinen Halsbereich 241, der in der Bohrung 236 und innerhalb der dritten Ringdichtung 239 beweglich ist, ferner einen Schulterbereich 242, dessen schräger Schulterbereich einen dritten Dichtsitz 243 in Zuordnung zur dritten Ringdichtung 239 am zweiten Ventilkörper 218 bildet, und des Weiteren einen zylindrischen Bauchbereich 244, der sich in nicht im Einzelnen dargestellter Weise an der Innenwandung des Konusbereichs 238 des zweiten Ventilkörpers 218 abstützt. Hierzu ist innerhalb der Ausnehmung 237 eine zweite Druckfeder 246 vorgesehen, die sich einenends an der Unterseite der dritten Ringdichtung 239 des zweiten Ventilkörpers 218 und anderenends an einer Schulter zwischen dem Schulterbereich 242 und dem Bauchbereich 244 des dritten Ventilkörpers 219 abstützt. Durch die zweite Druckfeder 246 ist der dritte Ventilkörper 219 in Richtung des Kühlerinneren vorgespannt. Zwischen dem Bauchbereich 244 des dritten Ventilkörpers 219 und dem Innenumfang der Ausnehmung 237 des zweiten Ventilkörpers 218 besteht ein Ringspalt 247 sehr geringer Breite, d. h. in einer Größenordnung von wenigen hundertstel Millimetern. Der Ringspalt 247 ist wie die Bohrung 236 und die Kammer 234 Teil einer ersten Strömungsverbindung 250 zwischen Deckelinnenseite und Deckelaußenseite. Eine zweite Strömungsverbindung 251 führt am Außenumfang des zweiten Ventilkörpers 218 vorbei (vgl. Fig. 10).

Im Zentrum des radial inneren Ventilkörperteils 265 des ersten Ventilkörpers 217 befindet sich die Öffnung 256, die auf der zum Kühlerinneren zugewandten Seite durch den Unterdruckventilkörper 257 der Ventilanordnung 215 verschlossen ist. Der Unterdruckventilkörper 257 ragt mit seinem Hauptteil 258 durch die zentrale Öffnung 256 und ist an dessen Endbereich von einer dritten Druckfeder 259 beaufschlagt, die sich einenends an einer Schulter des Hauptteils 258 und anderenends an der deckelaußenseitigen Fläche des radial inneren Ventilkörperteils 265 abstützt. Auf diese Weise ist der Unterdruckventilkörper 257 mit seinem ringförmigen Dichtsitz 261 an die Unterseite des radial inneren Dichtrandes 267 der ersten Ringdichtung 221 des ersten Ventilkörpers 217 dichtend angelegt. Der Dichtsitz 261 des Unterdruckventilkörpers 257 liegt radial innenseitig des ersten Dichtsitzes 224 des zweiten Ventilkörpers 218, während dieser radial außenseitig zum zweiten Dichtsitz 232 des Deckelinnenteils 214 und letzterer wiederum radial außenseitig zum dritten Dichtsitz 243 am dritten Ventilkörper 219 liegt. Dabei zeigen alle Dichtsitze 224, 232, 243, 261 axial nach außen, während alle Dichtflächen 221, 231, 239 axial nach innen zeigen.

In der in Fig. 6 dargestellten Ausgangsbetriebsstellung, in der ein erster Grenzwert des Behälterinnendrucks noch nicht überschritten ist, ist die erste Strömungsverbindung 250 durch die dichtende Anlage des ersten Ventilkörpers 217 mit seiner ersten Ring- bzw. Membrandichtung 221 am ersten Dichtsitz 224 des zweiten Ventilkörpers 218 verschlossen. Mit anderen Worten, in der Kammer 234 und damit an der Unterseite der ersten Ringdichtung 221 des ersten Ventilkörpers 217 steht durch den Ringspalt 247 hindurch der im Behälterinneren herrschende Druck in Form des über dem flüssigen Kühlermedium sich befindenden Luftpolsters an. Die zweite Strömungsverbindung 251 längs des Außenumfanges des zweiten Ventilkörpers 218 ist durch die dichtende Anlage der zweiten Dichtung 231 des zweiten Ventilkörpers 218 am zweiten Dichtsitz 232 des Deckelinnenteils 214 verschlossen.

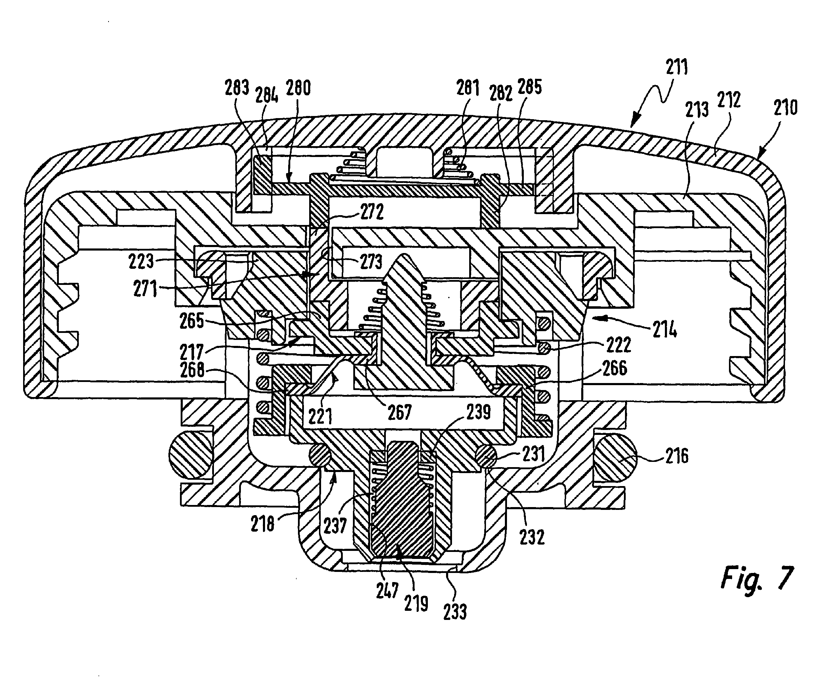

Erhöht sich der Behälterinnendruck auf einen bestimmten Betrag, der über dem Normal- bzw. Umgebungsdruck, jedoch unter einem ersten Grenzwert des Behälterinnendrucks liegt, wird die Abschraubsicherung des Verschlussdeckels 211 aktiviert. Gemäß Fig. 7 wird der radial innere Ventilkörperteil 265 des ersten Ventilkörpers 217 nach oben bewegt, wobei der zweite Ventilkörper 218 in seiner abdichtenden Stellung verbleibt. Außerdem verbleibt der radial äußere Ventilkörperteil 266 des ersten Ventilkörpers 217 in seiner gegenüber dem zweiten Ventilkörper 218 abdichtenden Stellung. Die Membranringdichtung 221 lässt diese Relativbewegung zwischen radial innerem Ventilkörperteil 265 und radial äußerem Ventilkörperteil 266 aufgrund ihrer mäanderartigen Form zwischen ihren beiden Dichtungsrändern 267 und 268 zu. Mit der Bewegung des radial inneren Ventilkörperteils 265 in Richtung des Pfeiles A nach außen.wird die aufsitzende Führungshülse 271 mitbewegt, die ihrerseits den Kupplungseinsatz 280 entgegen der Wirkung der Druckfeder 281 bewegt und dabei mit seinen Fingern 272 die axial nach innen gerichteten Klauen 283 aus den Ausnehmungen 283 im Verschlusselement 210 ausschiebt. Diese axiale Bewegung findet ihr Ende dann, wenn die Führungshülse 271 mit ihrer inneren Schulter am Verschlusselement 210 anschlägt. Aufgrund dieser Ausrückbewegung des Kupplungselementes 280 aus dem Verschlusselement 210 des Deckelaußenteils 213 wird bewirkt, dass das Griffelement 212 gegenüber dem Verschlusselement 210 leerdreht, so dass ab einem bestimmten definierten Überdruck (hier von bspw. 0,3 bar) ein Abschrauben des Verschlussdeckels 211 vom Behältereinfüllstutzen nicht mehr möglich ist.

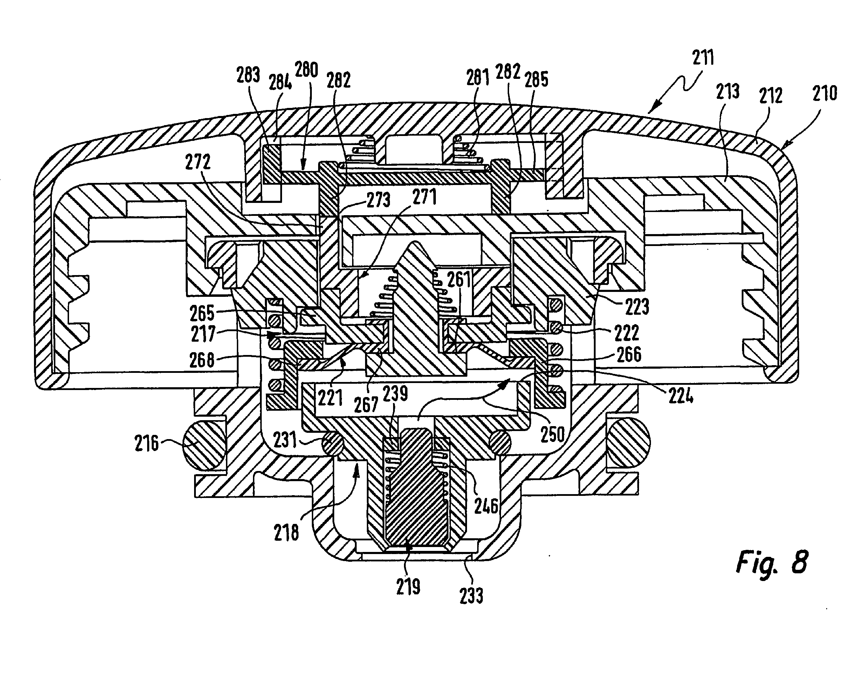

Erhöht sich der Behälterinnendruck weiter, d. h. über den vorgegebenen ersten Grenzwert (bspw. 1,4 bar), erreicht die Ventilanordnung 215 den in Fig. 8 dargestellten Betriebszustand, in welchem aufgrund des erhöhten Behälterinnendrucks der radial äußere Ventilkörperteil 266 des ersten Ventilkörpers 217 entgegen der Wirkung seiner ersten Druckfeder 222 mit radial äußerem Dichtrand 268 seiner ersten Ringdichtung 221 vom ersten Dichtsitz 224 des zweiten Ventilkörpers 218 abhebt und damit die erste Strömungsverbindung 250 öffnet, so dass Luft aus dem über dem flüssigen Kühlermedium befindlichen Luftpolster nach außen strömen und dadurch den Überdruck kompensieren oder abbauen kann. Durch den sich in der Kammer 234 befindenden Überdruck wird der zweite Ventilkörper 218 weiterhin mit seiner zweiten Ringdichtung 231 gegen den zweiten Dichtsitz 232 des Deckelinnenteils 214 gedrückt. Wird der Überdruck nach unterhalb des ersten Grenzwertes dadurch wieder abgebaut, gelangt der radial äußere Ventilkörperteil 266 wieder in dichtende Anlage mit dem zweiten Ventilkörper 218. Die Verdrehsicherung bleibt nach wie vor aktiviert.

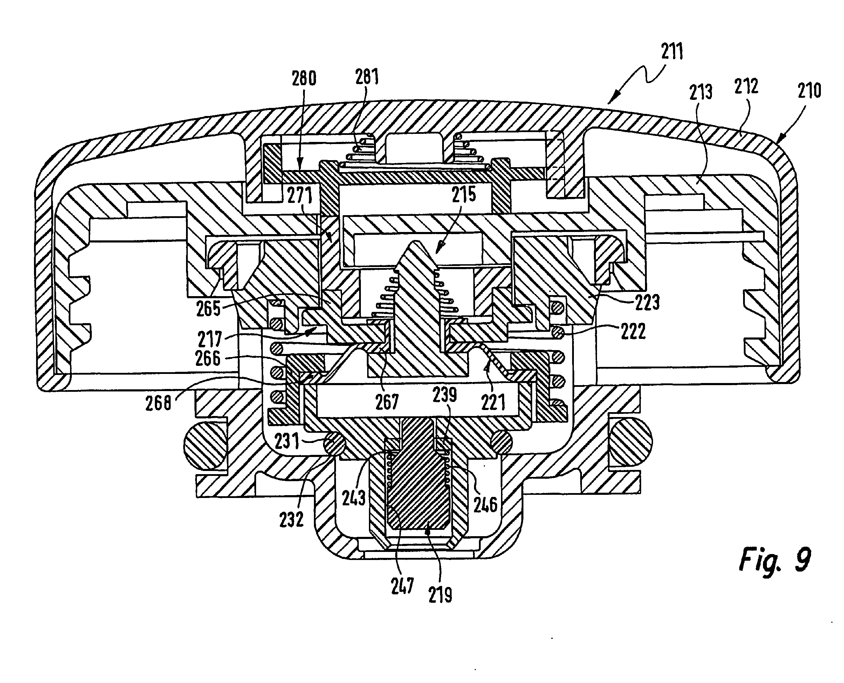

Erhöht sich dagegen der Behälterinnendruck auch während oder nach dem Entweichen des Luftpolsters weiter und führt dies dazu, dass flüssiges Kühlermedium an die Unterseite von zweitem und drittem Ventilkörper 218, 219 gelangt, ergibt sich aufgrund des sehr kleinen Ringspaltes 247 ein Stau des flüssigen Kühlermediums am Eingang des Ringspaltes 247 und damit ein Staudruck an der vollflächigen Unterseite des dritten Ventilkörpers 219. Dieser Staudruck führt zu einer axialen Bewegung des dritten Ventilkörpers 219 entgegen der Wirkung seiner zweiten Druckfeder 246, an deren Ende sich der dritte Dichtsitz 243 des dritten Ventilkörpers 219 an die dritte Ringdichtung 239 des zweiten Ventilkörpers 218 anlegt und die erste Strömungsverbindung 250 verschließt (vgl. Fig. 9).

Durch das Verschließen der ersten Strömungsverbindung 250 zwischen zweitem und drittem Ventilkörper 218, 219 ergibt sich ein Abbau des Druckes in der Kammer 234 auf einen Wert unterhalb des genannten vorgegebenen Grenzwertes, so dass der radial äußere Ventilkörperteil 266 des ersten Ventilkörpers 217 durch die Wirkung seiner ersten Druckfeder 222 zum zweiten Ventilkörper 218 hin bewegt wird. Auch diesen Zustand zeigt Fig. 9. Wird durch Abkühlen des Kraftfahrzeugkühlers der Behälterinnendruck abgebaut und damit das flüssige Kühlermedium wieder rückgeführt, wird der dritte Ventilkörper 219 unter der Wirkung seiner zweiten Druckfeder 246 rückgeführt, so dass sich die erste Strömungsverbindung 250 in diesem Bereich wieder öffnet, wie dies Fig. 6 zeigt.

Erhöht sich dagegen der Behälterinnendruck weiter, wird bei Überschreiten eines oberen Sicherheitdruckgrenzwertes der zweite Ventilkörper 218 entgegen der auf dem radial äußeren Ventilkörperteil 266 des ersten Ventilkörpers 217 lastenden ersten Druckfeder 222 vom zweiten Dichtsitz 232 am Deckelinnenteil 214 abgehoben, so dass die zweite Strömungsverbindung 251 geöffnet wird, wodurch der genannte Überdruck abgebaut werden kann (vgl. Fig. 10). Die Verdrehsicherung ist nach wie vor aktiviert. Dadurch kann der genannte Überdruck über die zweite Strömungsverbindung abgebaut werden, wonach eine entsprechende Rückführung der Ventilkörper über die verschiedenen Betriebszustände durch die einzelnen Druckfedern sowie des Kupplungseinsatzes 280 erfolgen kann, wie dies Fig. 6 zeigt. Steht der Kupplungseinsatz 280 dabei mit seinen unteren Klauen 283 in radialem Versatz zu den Ausnehmungen 273 im Verschlusselement 210, reicht ein Verdrehen des Griffelementes 210 aus, um Klauen 283 und Ausnehmungen 273 wieder zur Deckung zu bringen, so dass die gespannte Druckfeder 281 das Kupplungselement entgegen Pfeil A wieder in die nicht aktivierte Stellung bringt.

Die in Fig. 6 dargestellte Ausgangsstellung nimmt die Ventilanordnung 215 dann ein, wenn sich der Kühlerinnendruck zwischen einem Unterdruckgrenzwert und dem ersten Überdruckgrenzwert bewegt. Derartige Druckverhältnisse herrschen etwa bei einem für längere Zeit abstellten Fahrzeug oder bei Fahrbetrieb des Fahrzeugs und hinreichender Kühlung der im Kühlerinneren befindlichen Kühlflüssigkeit durch den Fahrtwind und/oder mit Ventilatorunterstützung. Wird das Fahrzeug bspw. nach längerer Fahrt stillgesetzt, so kann sich im Kühlerinneren ein Druckanstieg ergeben, aufgrund dessen der Ventilanordnung 215 Kühlerinhalt (Luft oder Wasser bzw. Wasserdampf) zuströmen kann. Expandiert das Kühlmittelvolumen infolge dieser Nachheizwirkung derart, dass das Behältervolumen überschritten wird, würde dies zwangsläufig zum Kühlmittelausstoß führen. Dieser unerwünschte Effekt wird in vorbeschriebener Weise dadurch verhindert, dass sich der in den Figuren 7 bis 9 dargestellte Betriebszustand der Ventilanordnung 215 einstellt. Wenn es in diesem Betriebszustand zu einem weiteren unkontrollierten Druckanstieg im Kühlsystem kommt, müssen Leckagen und andere nachteilige Auswirkungen durch Überbeanspruchung des Kühlerbehältnisses und/oder der Schlauchverbindungsstellen verhindert werden. Diese Auswirkungen werden durch die zweite Ventilstufe gemäß dem Zustand der Fig. 10 verhindert, die den Behälterdruck auf einen vorgegebenen Sicherheitsdruckwert begrenzt.

Herrscht im Kühlerinneren Unterdruck und unterschreitet dieser einen vorgegebenen Unterdruckgrenzwert, so wird, ausgehend von der Betriebslage nach Fig. 6, der Unterdruckventilkörper 257 mit seinem Dichtsitz 261 von der Unterseite des radial inneren Dichtrandes 267 der ersten Ringdichtung 221 des ersten Ventilkörpers 217 zum Kühlerinneren hin abgehoben. Das Absenken des Unterdruckventilkörpers 257 erfolgt gegen die Vorspannkraft der dritten Druckfeder 259, so dass sich in nicht dargestellter Weise ein Strömungsverbindungsweg zwischen dem Kühlerinneren und dem Kühleräußeren öffnet.

## Patentansprüche

1. Verschlussdeckel (111) für Öffnungen an Behältern, insbesondere an Kraftfahrzeugkühlern, mit einem Deckelaußenteil (110), der ein mit einem Behälterstutzen verbindbares Verschlusselement (113) und ein relativ dazu verdrehbar gehaltenes Griffelement (112) aufweist, mit einer Verdrehsicherung, die mit einem im Griffelement (112) drehfest gehalten und in das Verschlusselement (113) axial ein- und ausrückbarem Kupplungseinsatz (180) zum lösbar drehfesten Verbinden von verschluss- und Griffelement versehen ist, und mit einer einen axial hin- und herbewegbaren Ventilkörper (117) aufweisenden Ventilanordnung (115) zum Freigeben und Sperren von Strömungsverbindungen zwischen Behälterinnerem und -äußerem in Abhängigkeit von vorgegebenen Werten des Behälterinnendrucks, wobei die axiale Aus- und Einrückbewegung des Kupplungseinsatzes (180) von der druckabhängigen axialen Bewegung des Ventilkörpers (117) der Ventilanordnung (115) abgeleitet ist, **dadurch gekennzeichnet, dass** zwischen dem Ventilkörper (117) und dem Kupplungseinsatz (180) ein Führungselement (147), das einenends auf dem ventilkörper (117) aufsitzt und anderenends axial relativ bewegbar in das Kupplungselement (180)

2. Verschlussdeckel nach Anspruch 1, **dadurch gekennzeichnet, dass** zwischen dem Führungselement (147) und dem Deckelinnenteil (114) eine zweite Druckfeder (184) vorgesehen ist.

3. Verschlussdeckel nach mindestens einem der vorhergehenden Ansprüche, **dadurch gekennzeichnet, dass** der Kupplungseinsatz (180) außenumfangsseitig und das Verschlusselement (113) innenumfangsseitig mit einer axial verlaufenden Verzahnung versehen ist. eingreift, und eine axiale erste Druckfeder (183), vorgesehen sind und dass das Führungselement (147) in Richtung der Wirkung der ersten Druckfeder (183) mit dem Kupplungseinsatz (180) axial bewegungskoppelbar ist.

4. Verschlussdeckel (211) für Öffnungen an Behältern, insbesondere an Kraftfahrzeugkühlern, mit einem Deckelaußenteil (210), der ein mit einem Behälterstutzen verbindbares Verschlusselement (213) und ein relativ dazu verdrehbar gehaltenes Griffelement (212) aufweist, mit einer Verdrehsicherung, die mit einem Griffelement (212) drehfest gehaltenen und in das Verschlusselement (213) axial ein- und ausrückbarem Kupplungseinsatz(280) zum lösbar drehfesten Verbinden von Verschluss- und Griffelement versehen ist, und mit einer einen axial hin- und herbewegbaren ventilkörper (217) aufweisenden Ventilanordnung (215) zum Freigeben und Sperren von Strömungsverbindungen zwischen Behälterinnerem und - äußerem in Abhängigkeit von vorgegebenen Werten des Behälterinnendrucks, wobei die axiale Aus- und Einrückbewegung des Kupplungseinsatzes (280) von der druckabhängigen axialen Bewegung des Ventilkörpers (217) der Ventilanordnung (215) abgeleitet ist, **dadurch gekennzeichnet, dass** zwischen dem Ventilkörper (217) und dem Kupplungseinsatz (280) ein Bewegungsübertragungselement (271) vorgesehen ist, das einenends auf dem Ventilkörper (217) und anderenends am Kupplungseinsatz (280) anliegt, und dass das Kupplungselement (280) von einer Druckfeder (281) beaufschlagt ist, die sich an der Innenseite des Griffelements (212) abstützt.

5. Verschlussdeckel, nach Anspruch 4, **dadurch gekennzeichnet, dass** das Kupplungselement (280) und das diesem zugewandte Ende des Bewegungsübertragungselementes (271) mit aneinander liegenden axialen Fingern (283, 272) in axiale Ausnehmungen (273) des Verschlusselementes (2139 greifen.

## Claims

1. Closure cap (111) for openings in tanks, in particular in automobile radiators, with an outer cap component (110) which is provided with a locking element (113) that can be connected to the tank's neck, and provided with a handling element (112) rotatably mounted in relation to said locking element, with an anti-rotation means provided with coupling insert (180) which is held non-rotatably in the handling element (112) and can be axially moved back and forth, for the releasable antirotational connection of the locking and handling element, and with a valve assembly (115) containing a valve body (117) that can be axially moved back and forth, for releasing and blocking flow connections between the inside and the outside of the tank depending on predetermined values of the pressure prevailing inside the tank, whereby the axial engaging and disengaging movement of the coupling insert (180) is derived from the pressure-dependent axial movement of the valve body (117) of the valve assembly (115), **characterized in that** between the valve body (117) and the coupling insert (180) a guidance element (147), whose one end sits on the valve body (117) and whose other end can be axially moved in relation to the coupling element (180) and engages in same, and an axial first compression spring (183) are provided and that the guidance element (147) is axially movable and can be coupled with the coupling insert (180) in the direction of the effect of the first compression spring (183).

2. Closure cap according to Claim 1, **characterized in that** a second compression spring (184) is provided between the guidance element (147) and the inner cap component (114).

3. Closure cap according to at least one of the previous Claims, **characterized in that** axially extending teeth are provided on the outer circumference of the coupling insert (180) and on the inner circumference of the locking element (113).

4. Closure cap (211) for openings in tanks, in particular in automobile radiators, with an outer cap component (210) which is provided with a locking element (213) that can be connected to the tank's neck, and provided with a handling element (212) rotatably mounted in relation to said locking element, with an anti-rotation means provided with coupling insert (280) which is held non-rotatably in the handling element (212) and can be axially moved back and forth, for the releasable antirotational connection of the locking and handling element, and with a valve assembly (215) containing a valve body (217) that can be axially moved back and forth, for releasing and blocking flow connections between the inside and the outside of the tank depending on predetermined values of the pressure prevailing inside the tank, whereby the axial engaging and disengaging movement of the coupling insert (280) is derived from the pressure-dependent axial movement of the valve body (217) of the valve assembly (215), **characterized in that** between the valve body (217) and the coupling insert (280) a movement-transmitting element (271) is provided whose one end adjoins the valve body (217) and whose other end adjoins the coupling insert (280), and that the coupling element (280) is acted upon by a compression spring (281) which is supported on the inside of the handling element (212).

5. Closure cap according to Claim 4, **characterized in that** the coupling element (280) and the end of the movement-transmitting element (271) which faces the former have mutually adjoining fingers (283, 272) which engage in axial recesses (273) of the locking element (213).

## Revendications

1. Bouchon de fermeture (111) pour des ouvertures sur des réservoirs, en particulier sur des radiateurs automobiles, comportant une partie externe de bouchon (110), qui présente un élément de fermeture (113) pouvant être relié à un bec de récipient, et un élément d'accrochage (112) maintenu de manière à pouvoir tourner par rapport à celui-ci, comportant une sécurité anti-rotation, qui est munie d'un insert d'accouplement (180) maintenu en rotation dans l'élément d'accrochage (112) et pouvant être engrené et désengrené axialement dans l'élément de fermeture (113) pour une liaison amovible en rotation entre l'élément de fermeture et l'élément d'accrochage, et comportant un agencement de soupape (115), qui présente un corps de soupape (117) pouvant se déplacer selon un mouvement de va et vient afin de libérer et de bloquer les communication de flux entre l'intérieur et l'extérieur du réservoir en fonction de valeurs prédéfinies de la pression régnant à l'intérieur du réservoir, moyennant quoi le mouvement de désengrènement et d'engrènement axial de l'insert d'accouplement (180) est déduit du déplacement axial, en fonction de la pression, du corps de soupape (117) de l'agencement de soupape (115),
**caractérisé en ce que**, entre le corps de soupape (117) et l'insert d'accouplement (180), sont prévus un élément de guidage (147), qui repose à une extrémité sur le corps de soupape (117), et à l'autre extrémité est mobile axialement pour s'engager dans l'élément d'accouplement (180), et un premier ressort de pression axial (183), et **en ce que** l'élément de guidage (147) peut être accouplé de manière mobile axialement en direction de l'action du premier ressort de pression (183) avec l'insert d'accouplement (180).

2. Bouchon de fermeture selon la revendication 1,
**caractérisé en ce que**, entre l'élément de guidage (147) et la partie interne du bouchon (114), est prévu un deuxième ressort de pression (184).

3. Bouchon de fermeture selon au moins l'une quelconque des revendications précédentes, **caractérisé en ce que** l'insert d'accouplement (180) est doté, du côté du pourtour externe et l'élément de fermeture (113) est doté, du côté du pourtour interne, d'une denture s'étendant axialement.

4. Bouchon de fermeture (211) pour des ouvertures sur des réservoirs, notamment sur des radiateurs automobiles, comportant une partie externe de bouchon (210), qui présente un élément de fermeture (213) pouvant être relié à un bec de récipient et un élément d'accrochage (212) pouvant être maintenu en rotation par rapport à celui-ci, comportant une sécurité anti-rotation qui est munie d'un insert d'accouplement (280) maintenu en rotation avec l'élément d'accrochage (212) et pouvant être engrené et désengrené axialement dans l'élément de fermeture (213) pour une liaison amovible en rotation entre l'élément de fermeture et l'élément d'accrochage, et comportant un agencement de soupape (215) présentant un corps de soupape (217) pouvant effectuer un mouvement de va et vient axial afin de libérer et de bloquer les communications de flux entre l'intérieur et l'extérieur du réservoir en fonction des valeurs prédéfinies de la pression régnant à l'intérieur du réservoir, moyennant quoi le mouvement de désengrènement et d'engrènement de l'insert d'accouplement (280) est déduit du déplacement axial en fonction de la pression du corps de soupape (217) de l'agencement de soupape (215),
**caractérisé en ce que**, entre le corps de soupape (217) et l'insert d'accouplement (280) est prévu un élément de transmission du mouvement (271), qui repose à une extrémité sur le corps de soupape (217) et à l'autre extrémité sur l'insert d'accouplement (280), et **en ce que** l'élément d'accouplement (280) est sollicité par un ressort de pression (281), qui repose sur la face interne de l'élément d'accrochage (212).

5. Bouchon de fermeture selon la revendication 4,
**caractérisé en ce que** l'élément d'accouplement (280) et l'extrémité orientée vers celui-ci de l'élément de transmission du mouvement (271) présentant des doigts axiaux (283, 272) adjacents les uns aux autres s'engagent dans des évidements axiaux (273) de l'élément de fermeture (213).
